# EUROPEAN PATENT APPLICATION

(11) **EP 4 095 289 A1**
(43) Date of publication of application: **30.11.2022**
(21) Application number: 21744144.3
(22) Date of filing: 20.01.2021
(51) Int. Cl.: C25D 5/50

(54) **STAINLESS STEEL MATERIAL HAVING ANTIBACTERIAL PROPERTIES AND ANTIVIRAL PROPERTIES AND METHOD FOR MANUFACTURING SAME**

(30) Priority: 21.01.2020 JP 2020007699
(71) Applicant: NIPPON STEEL Stainless Steel Corporation, Tokyo 100-0005 (JP)
(72) Inventor: KAWANO, Akinori, Tokyo 100-0005 (JP); EHARA, Yasuhiro, Tokyo 100-0005 (JP); MORIMOTO, Kenichi, Tokyo 100-0005 (JP); SUETSUGU, Teruhiko, Tokyo 100-0005 (JP)
(74) Representative: Papula Oy
(86) International application number: PCT/JP2021/001861
(87) International publication number: WO 2021/149725

(57) **Abstract**

Provided is a stainless steel material which contains Cu that is an antibacterial component, has excellent antibacterial properties and excellent antiviral properties, and has a color tone of a stainless steel. The present invention is a stainless steel material having antibacterial properties and antiviral properties, the stainless steel material containing a Cu-rich region 3 in which the concentration of Cu (copper) is higher than the average Cu concentration in a matrix along grain boundaries in a surface 1 of the stainless steel material and a surface layer 2 located immediately below the surface of the stainless steel material, wherein the Cu-rich region 3 is a region in which the concentration is as high as 5% by mass or more relative to the above-mentioned average Cu concentration and has Cu grain boundary layers 6 that extend continuously at a depth of 10 µm to 200 µm from the surface 1 of the stainless steel material, the average number of the Cu grain boundary layers 6 is 2.0 or more per 100 µm of a distance parallel to the surface of the stainless steel material in a cross section orthogonal to the surface of the stainless steel material, and the chromatic index a* in a CIE Lab color space on the above-mentioned surface is 0 to 3.0 inclusive.

## Description

### TECHNICAL FIELD

The present invention relates to a stainless steel material having antibacterial properties and antiviral properties and a method for manufacturing the same.

### BACKGROUND ART

Stainless steel is a material rich in corrosion resistance and thus is used in many fields. On the other hand, base materials having antibacterial functions are requested for attention to hygiene and bacterial prevention in recent years. According to conventional antibacterial stainless steels, there are known stainless steel materials that are imparted with antibacterial properties by means of (A) containing antibacterial components in the matrix components, (B) adhering antibacterial components to the surface of the steel materials, or (C) mixing antibacterial components inside the matrix by physical methods. In the present specification, copper and silver may be described by their respective element symbols, "Cu" and "Ag".

For the means of (A), Patent Document 1 can be cited as an example. Patent Document 1 describes an austenite-based stainless steel for coins that is formulated to have Cu% + Si% ≥ 2.3 wt% and Cu% ≥ 1.5 × Si%.

However, for the means of (A), the amount of antibacterial components that can be contained in the matrix is limited, depending on the basic composition of the stainless steel, and thus sufficient antibacterial properties cannot be obtained. In addition, since the amount of a stainless steel material itself eluted in water is very small, only the antibacterial components that are exposed on the surface at the initial stage of use have effects on the antibacterial properties. The antibacterial effect decreased as the antibacterial components that were exposed on the surface flowed out, and therefore the antibacterial action was not sufficiently sustained.

For the means of (B), Patent Document 2 and Patent Document 3 can be cited as examples. Patent Document 2 describes a stainless steel material that contains silver oxide in a matrix and has antibacterial component particles that are penetrated and fixed to a surface layer. Patent document 3 describes an antibacterial treatment method in which copper is precipitated on the surface of stainless steel by electrolytic plating copper to develop antibacterial properties.

However, since the means of (B) only adheres antibacterial components to the surface, there is a problem that the antibacterial components on the surface falls off, and the antibacterial properties disappear when the matrix is subjected to processing or surface polishing treatment. Furthermore, in Patent Document 2, particles are pushed into the material by an external force, so that fine gaps are formed between the fixed and infiltrated particles and the matrix phase. Therefore, there is a problem of decrease in processability and corrosion resistance. In addition to the problem that the copper plating easily falls off during processing and the antibacterial properties disappear since the adhesion between the minute copper plating, which is an antibacterial component, and the stainless steel matrix is not sufficient, Patent Document 3 has a problem that particles that form a plating layer are minute and are inferior in antibacterial persistence under the condition that stainless steel is not colored much.

For the means of (C), Patent Document 4 and Patent Document 5 can be cited as an example. Patent Document 4 describes an antibacterial clad cutter in which antibacterial layers are laminated on both sides of the core material layer so as to sandwich the layer. Patent Document 5 describes a method for forming an antibacterial layer in which Cu or Ag powder is projected onto the surface of a treated material using a shot peening device to form an antibacterial layer with a high Cu or Ag concentration.

However, the means of (C) has problems in terms of cost, productivity, compatibility with a wide range of materials, etc., since special treatment methods such as cladding and shot peening are used to impart antibacterial properties. Patent Document 5 further has a problem that the antibacterial layer was thin, and the antibacterial persistence is insufficient.
Patent Document 1: Japanese Unexamined Patent Application, Publication No. H08-53738
Patent Document 2: Japanese Unexamined Patent Application, Publication No. 2000-192259
Patent Document 3: Japanese Unexamined Patent Application, Publication No. 2016-196700
Patent Document 4: Japanese Unexamined Patent Application, Publication No. H11-76642
Patent Document 5: Japanese Unexamined Patent Application, Publication No. 2001-179631

### DISCLOSURE OF THE INVENTION

### Problems to be Solved by the Invention

The antibacterial properties of antibacterial stainless steel are developed by the elution of antibacterial components (Cu and Ag) as ions from the surface. Therefore, it is preferable that the surface layers of stainless steel contain an antibacterial component to sustain the antibacterial properties. The action of Cu is known to be effective not only against bacteria but also against many viruses, and antibacterial components (Cu and Ag) are effective also in terms of antiviral properties. However, in the conventional methods, it is impossible to accumulate a sufficient amount of antibacterial components in the surface layer. In addition, the antibacterial components flow out as time passes, making it difficult to sustain the antibacterial action sufficiently.

Furthermore, when cost-effective copper is applied as an antibacterial component, there is a problem in terms of deterioration in the appearance depending on applications since the copper color is mixed with the silver-white color of stainless steel.

In addition, stainless steel materials having antibacterial properties are required to have processability, such as bending processing, depending on its application.

An object of the present invention is to provide a stainless steel material which contains Cu that is an antibacterial component, has excellent antibacterial properties and excellent antiviral properties, and has a color tone of a stainless steel as well as good processability.

### Means for Solving the Problems

As a result of studies to achieve the above object, the present inventors have found that a stainless steel material having a Cu-rich region in which Cu is unevenly distributed in the surface layer can be obtained by applying Cu plating to the surface of the stainless steel material, followed by heat treatment. Then the present invention has been completed. Specifically, the present invention includes the following embodiments.
(1) A stainless steel material having antibacterial properties and antiviral properties, comprising a Cu-rich region extending along a crystal grain boundary on a surface of the stainless steel material and in a surface layer located immediately below the surface and having a Cu (copper) concentration higher than an average Cu concentration in a matrix,
   wherein the Cu-rich region is a region having a concentration higher by 5% by mass or more relative to the average Cu concentration, and
   has a Cu grain boundary layer that extends continuously at a depth of 10 µm to 200 µm from the surface of the stainless steel material,
   an average number of Cu grain boundary layers is 2.0 or more per 100 µm of a distance parallel to the surface of the stainless steel material in a cross section orthogonal to the surface, and
   a chromatic index a* in a CIE Lab color space on the surface is 0 or more and 3.0 or less.
(2) The stainless steel material having antibacterial properties and antiviral properties according to (1), having an average crystal grain size of 1 to 100 µm on the surface.
(3) The stainless steel material having antibacterial properties and antiviral properties according to (1) or (2), wherein the Cu-rich region includes a Cu grain boundary layer that extends along the crystal grain boundary and a Cu intragranular diffusion layer formed within the crystal grain.
(4) A method for manufacturing the stainless steel material having antibacterial properties and antiviral properties according to any one of (1) to (3), comprising: applying Cu plating that has a thickness of 0.05 to 2.0 µm to a stainless steel material; and heating the stainless steel material that has the Cu plating under a non-oxidation atmosphere at a heating rate of 5°C/s or higher on average, followed by cooling at an average cooling rate of 1°C/s or higher.
(5) The method for manufacturing the stainless steel material having antibacterial properties and antiviral properties according to (4), comprising making an average film thickness of the Cu plating to 1.0 µm or less by rolling after the Cu plating is applied.
(6) The method for manufacturing the stainless steel material having antibacterial properties and antiviral properties according to (4) or (5), wherein the non-oxidation atmosphere includes at least one selected from the group consisting of argon gas, hydrogen gas, and nitrogen gas.

### Effects of the Invention

According to the present invention, the surface layer of the stainless steel material has a Cu-rich region that extends along the crystal grain boundary from the surface to the interior, so that Cu is continuously eluted during use, producing the effect of sustaining a strong antibacterial action for a long period of time. Compared to conventional Cu-containing stainless steels, advantageous effects can be obtained in terms of sustained antibacterial effects and resistance to loss of antibacterial properties even after processing or polishing treatment are performed, etc. Furthermore, the amount of Cu plating that remains on the surface is small, and therefore changes in the color tone on the surface can be suppressed. In addition to this, the Cu-rich region is distributed at a moderate depth, making it possible to suppress surface cracks in bending processing.

### BRIEF DESCRIPTION OF THE DRAWINGS

FIG. 1 is a schematical drawing illustrating Cu-rich regions on a surface in the present embodiment; and
FIG. 2 is a schematical drawing illustrating cross-sectional Cu-rich regions in the present embodiment.

### PREFERRED MODE FOR CARRYING OUT THE INVENTION

Hereinafter, the embodiments according to the present invention will be explained. The present invention is not limited to the following descriptions. Note that in the present specification, a notation of "X to Y" (X and Y are any numerical values) means "X or more and Y or less".

### (Cu-rich region)

The stainless steel material according to the present embodiment includes a Cu-rich region in which the Cu (copper) concentration is higher than the average Cu concentration in a matrix along a crystal grain boundary on the surface thereof and in the surface layer located immediately below the surface. The Cu-rich region is a region in which the Cu concentration is higher by 5% by mass or more relative to the average Cu concentration in the matrix. Note that in the present specification, "average Cu concentration" may also be described as "average concentration". The surface layer is a metal structure located immediately below the surface, which includes the surface. In the surface layer, Cu components are unevenly distributed along the crystal grain boundaries.

Since the Cu solid solution limit of stainless steel is about 5% by mass at maximum, in the region in which the Cu concentration is higher by 5% by mass or more than the average concentration in the matrix, some of the Cu atoms precipitate without being dissolved as solid to form a second phase that is different from the matrix phase. Therefore, the Cu-rich region according to the present embodiment can be considered to be a region including a fine Cu-dominated second phase. The Cu-rich region according to the present embodiment includes a region formed at and around the crystal grain boundaries by extending along the crystal grain boundaries from the surface to the interior. In the present specification, the Cu-rich region that extends along the crystal grain boundaries is referred to as a "Cu grain boundary layer" and may also be described as a "grain boundary layer". Since a Cu component, which is an antibacterial component, is contained in the surface layer, it is eluted from the surface of the stainless steel material as copper ions and develops antibacterial properties.

The Cu grain boundary layer in the Cu-rich region preferably extends continuously at a depth of 10 µm or more from the surface. On the other hand, if the Cu-rich region extends excessively deeply, cracks may occur in the grain boundary layer during bending processing, and therefore, the length of the Cu-rich region extending is preferably 200 µm or less. The lower limit of the thickness of the Cu-rich region is not particularly limited, and is preferably 0.01 µm or more and more preferably 0.02 µm or more.

The Cu-rich region according to the present embodiment is formed by Cu diffusing not only in the crystal grain boundaries but also in crystal grains from the surface to the interior. In the present specification, this Cu-rich region in the crystal grain is referred to as a "Cu intragranular diffusion layer" and may also be described as an "intragranular diffusion layer". The Cu intragranular diffusion layer includes a fine Cu-dominated second phase, similar to the Cu-rich region of the Cu grain boundary layer formed along the crystal grain boundaries. For the Cu intragranular diffusion layer, a site from which copper ions are eluted is mainly limited to the second phase exposed on the surface, so that the elution of copper ions is completed at an early stage. Therefore, the contribution to the antibacterial persistence is not as large as that of the Cu-rich region of the Cu grain boundary layer. The surface layer, including the intragranular diffusion layer formed from the surface to a certain depth, is harder than the internal region by precipitation hardening due to precipitation of the second phase. Therefore, if the intragranular diffusion layer is formed to be thick , surface cracks occur during bending processing, resulting in decrease in processability. The depth at which the intragranular diffusion layer is formed (hereinafter referred to as the "formation depth of the intragranular diffusion layer") is preferably 20 µm or less, more preferably 10 µm or less, and even more preferably 5 µm or less.

A form in which the Cu-rich region according to the present embodiment is distributed can be identified, for example, by the measurement method as explained below. A measurement portion corresponding to an area of 10000 µm² is selected on the surface of the stainless steel material and in a cross section orthogonal to the surface, and the measurement portion is subjected to mapping analysis using EPMA (electron probe micro analyzer) or EDX (energy-dispersive X-ray analysis), making it possible to identify the Cu-rich region, which is a region in which the concentration of Cu is as high as 5% by mass or more relative to the average concentration in the matrix. Since the solid solution limit of Cu in the stainless steel is about 5% by mass at maximum, if the Cu concentration is 5% by mass or more higher than the average concentration in the matrix, the Cu-rich region can be considered to include a fine Cu-dominated second phase.

The above EPMA and EDX are analytical means used for quantitative analysis of component concentration, and the concentration of contained components is analyzed by irradiating a sample surface with an accelerated electron beam and using the spectrum of characteristic X-rays generated from the sample surface. The analysis target is a minute region in which the sample surface to be irradiated by the electron beam has a diameter of several µm and several µm immediately below the surface. If the measurement conditions such as acceleration voltage in EPMA and EDX are constant, the size of the sample surface and the minute region in which the characteristic X-rays are generated is considered to be the same. Therefore, the Cu concentration in the Cu-rich region according to the present embodiment can be identified as the Cu concentration in the minute region.

The above EPMA and EDX analysis methods detect not only information from the portion irradiated with the electron beam but also information from the vicinity. Accordingly, if the surface of the sample is measured and analyzed, both the amount of Cu in the matrix and the amount of Cu in the intragranular diffusion layer are obtained as information, and the Cu concentration is calculated based on the information. The Cu intragranular diffusion layer according to the present embodiment is defined as a region identified based on the Cu concentration obtained by the analysis method as described above. For example, in the case of a sample in which the intragranular diffusion layer is thinly formed, the Cu concentration in the matrix located under the intragranular diffusion layer occupies a large proportion of the Cu concentration calculated from the information from the surface. Therefore, the Cu concentration in the region other than the Cu grain boundary layer is calculated as a Cu concentration close to the average concentration in the matrix. As a result, it may be regarded as not corresponding to the intragranular diffusion layer of the present embodiment.

On the other hand, when the intragranular diffusion layer of the sample is thick in the sheet thickness direction, the Cu concentration in the intragranular diffusion layer occupies a large proportion in the information on the amount of Cu obtained from the surface. Accordingly, the proportion (area ratio) of the Cu-rich region to occupy increases. Depending on the manufacturing conditions, the entire surface of the sample may be determined as a Cu-rich region. For this reason, the formation depth of the intragranular diffusion layer needs to be calculated from the EPMA or EDX mapping analysis of the cross section including the surface.

With regard to the above analysis data on Cu concentrations, it similarly occurs in the sheet thickness direction of the sample, and when the cross section of the sample is analyzed, the amount of Cu in the matrix is obtained as information. For the average Cu concentration in the matrix according to the present embodiment, a measurement portion corresponding to an area of 10000 µm² is selected near the center of the cross section in the sheet thickness direction, and mapping analysis by EPMA is performed on the measurement portion to use the resulting average Cu concentration. When a measurement area of 10000 µm² cannot be selected in the range excluding the Cu-rich region since the thickness of the stainless steel material is thin, EPMA mapping analysis is performed on the cross section orthogonal to the surface of the stainless steel material before the Cu plating. The resulting average Cu concentration is used as the average Cu concentration in the matrix according to the present embodiment. The measurement conditions may be, for example, an acceleration voltage of 15 kV, a beam diameter of 3 nm, an analysis time of 30 ms, and a measurement interval of 0.2 µm.

For Cu concentration analysis by EPMA or EDX, it is preferable to adopt a ZAF correction method.

In addition to EPMA and EDX, other elemental analysis methods with the same or higher spatial resolution can be used. For example, mapping analysis can be performed by TEM-EDX, TEM-EELS, etc. The thickness of the Cu-rich region can be measured in the image in which the cross section is observed.

Another method is to measure the Cu-rich region by chemically etching the cross section of stainless steel materials. For example, if a cross section of a stainless steel material is chemically etched using nitric acid solution, the dissolution rate of the Cu-rich region is significantly higher than the dissolution rate of the matrix structure, so that the Cu-rich region forms void portions along the grain boundaries. For this reason, the distribution form of the Cu-rich region can be evaluated in a simple manner by observing the grain boundaries of the sample cross section after chemical etching and by measuring the distribution form of the void portions. In this case, it is necessary to measure components eluted by chemical etching by ICP analysis, etc., and confirm that the fraction of Cu in the eluted metal ions is 5% by mass or more higher than the average Cu fraction of the matrix.

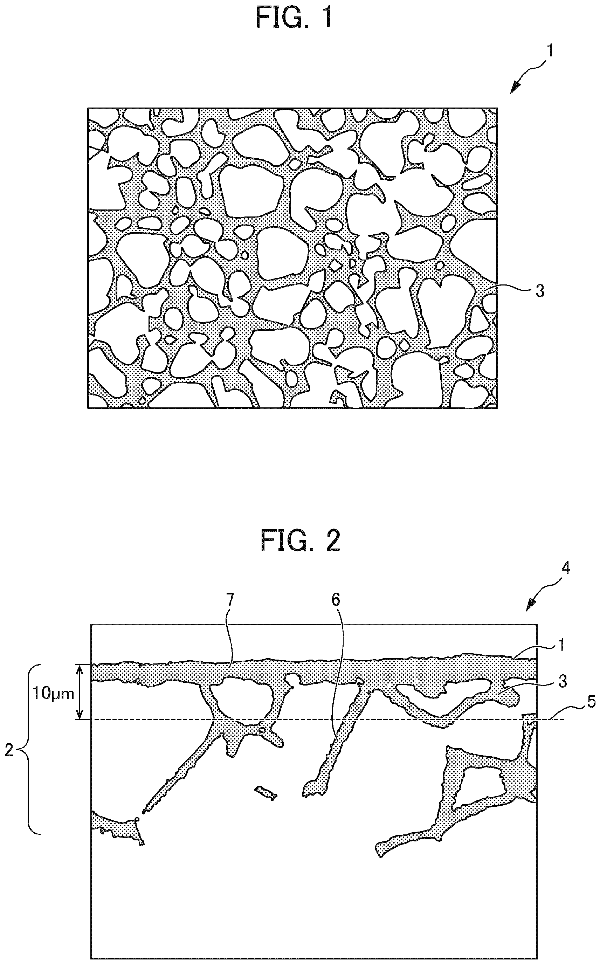

FIG. 1 schematically shows the distribution form of Cu-rich regions on the surface of the stainless steel material according to the present embodiment. As shown in FIG. 1, on a surface 1 of the stainless steel material, a Cu-rich region 3 is distributed as an intragranular diffusion layer 7 from the surface 1 to the interior, and further distributed as a grain boundary layer 6 at and around crystal grain boundaries extending to the interior. Such distribution form is considered to be due to the treatment of Cu penetration from the surface of stainless steel materials, which causes Cu atoms to diffuse into crystal grains and diffuse along the crystal grain boundaries in which they can easily move. For the Cu component in the Cu-rich region, Cu is eluted as ions from the surface of the stainless steel material, depending on the environment in which the stainless steel material is arranged, to produce an antibacterial action. The higher the amount of Cu contained in the surface layer, the more the antibacterial action can be enhanced and also the longer the antibacterial action can be sustained. Therefore, the high proportion of the Cu-rich region in the surface layer is preferable.

### (Area ratio of Cu-rich region)

As described above, when the intragranular diffusion layer is thin, the influence of the intragranular diffusion layer on the measured Cu concentration is small, so that a distribution state of the Cu-rich region including the grain boundary layer can be known from the surface of the stainless steel material. FIG. 1 schematically shows the distribution state. The Cu-rich region according to the present embodiment preferably has an area ratio of 5 to 30% of the surface being measured. The area ratio means a proportion of the area of the Cu-rich region to the surface being measured. If the area ratio is less than 5%, the amount of Cu contained in the surface layer is small, and therefore, a sufficient antibacterial action cannot be obtained. On the other hand, if the area ratio is more than 30%, the amount of Cu contained in the surface layer becomes excessive, and an appearance of the silver-white stainless steel skin becomes copper-reddish color. Accordingly, the appearance of the stainless steel material is not preferable for some applications in terms of the surface color tone.

### (Depth of Cu-rich region)

The Cu-rich region is preferably in the form of a Cu-rich region that extends continuously at depth of 10 µm to 200 µm from the surface in a cross section orthogonal to the measured surface. FIG. 2 schematically shows the distribution form of Cu-rich regions in the cross section of the stainless steel material according to the present embodiment. As shown in FIG. 2, in a cross section 4 of the stainless steel material, the Cu-rich region 3 is distributed from the surface 1 as a Cu grain boundary layer 6 that continuously extends mainly along crystal grain boundaries. In the form of such Cu-rich region 3, antibacterial properties can sufficiently develop due to the large amount of Cu contained in a surface layer 2. Since the Cu-rich region 3 is in the form containing the Cu grain boundary layer 6 that extends continuously along the crystal grain boundaries from the surface 1, it is advantageous for the Cu component to be eluted to the surface using the crystal grain boundaries as a route from the Cu-rich region formed in the deep position to develop antibacterial properties. On the other hand, if the Cu grain boundary layer is in a discontinuous and dispersed form, the amount of Cu eluted that is required for antibacterial properties cannot be ensured since the Cu components do not elute from the Cu grain boundary layer that does not have a path to the surface. Even in a continuous form, if the depth is less than 10 µm, the persistence of the antibacterial action is not sufficient. If the depth is more than 200 µm, cracks of grain boundaries tends to occur, deteriorating bending workability.

As shown in FIG. 2, an intragranular diffusion layer 7 in the Cu-rich region is formed from the surface to the interior. The formation depth of the intragranular diffusion layer can be calculated as an average thickness of the Cu-rich region in particles of crystal grains facing that surface by performing a mapping analysis by EPMA or EDX on the cross section including the surface and by selecting a measurement portion corresponding to an area of 10000 µm². Therefore, if the intragranular diffusion layer is thickened, surface cracks occur during bending processing, resulting in decrease in processability. Accordingly the formation depth of the intragranular diffusion layer is preferably 20 µm or less.

### (Average number of Cu-rich regions)

Furthermore, the average number of Cu-rich regions including Cu grain boundary layers that extend continuously at a depth of 10 µm to 200 µm from the surface is preferably 2.0 or more per 100 µm of a distance parallel to the surface. If the average number is large, the Cu contained in the surface layer provides sufficient antibacterial properties. As shown in FIG. 2, an imaginary line 5 parallel to the surface is drawn at position of 10 µm depth, and the number of intersecting Cu grain boundary layers per 100 µm distance is measured, so that the average number can be calculated. If the depth of the Cu intragranular diffusion layer is more than 10 µm, the imaginary line 5 may be drawn at a lower position 1 µm from the lower position of the Cu intragranular diffusion layer (the interface between the Cu intragranular diffusion layer and the matrix) to calculate the average number.

### (Amount of Cu eluted)

With regard to antibacterial properties and antiviral properties, the stainless steel material is immersed in a predetermined solution in which Cu is preferentially eluted, and the amount of Cu eluted from the surface of stainless steel material can be used to evaluate the degree of antibacterial properties and antiviral properties. Specifically, after the stainless steel material is immersed in a certain amount of solution (for example, nitric acid aqueous solution is preferable) for a predetermined time, the amount of Cu in the solution is analyzed to obtain the amount of Cu eluted per unit area. It can be said that the higher the amount of Cu eluted, the more antibacterial components and antiviral components (Cu ions) that can flow out from the surface of the stainless steel material, and thus the higher the antibacterial properties and antiviral properties. With regard to the antibacterial properties of the stainless steel material, the amount of Cu eluted is preferably 1000 ppm/m² or more and more preferably 10000 ppm/m² or more.

### (Antibacterial activity value)

Furthermore, the antibacterial properties can be evaluated by measuring an antibacterial activity value described in JIS Z2801 (2012). The antibacterial activity value is a value indicating the difference in the logarithmic value of viable cell counts after ingestion and incubation for an antibacterial processed product and an unprocessed product. It can be said that the higher the antibacterial activity value, the higher the antibacterial properties. With regard to the antibacterial properties, the antibacterial activity value of the stainless steel material is preferably 2.0 or more and more preferably 2.5 or more.

### (Antiviral activity value)

Furthermore, the antiviral properties can be evaluated by measuring an antiviral activity value described in ISO21702:2019. The antiviral activity value is the difference in virus infectivity titers (normal logarithm of the number of viruses that can infect cells) between the antiviral processed product and the unprocessed product after a drop of viral solution is added and left to stand for 24 hours. It can be said that the higher the antiviral activity values, the higher the antiviral properties. The antiviral activity value of the stainless steel material is preferably 2.0 or more and more preferably 2.5 or more.

### (Antibacterial persistence and antiviral persistence)

Stainless steel materials with excellent antibacterial persistence and antiviral persistence, that is, a long period of time in which antibacterial properties and antiviral properties are maintained, are preferable as antibacterial base material and antiviral base materials. After the stainless steel materials are immersed in water for a long period of time, the amount of Cu eluted from the stainless steel materials is measured, and antibacterial persistence and antiviral persistence can be evaluated by the amount of Cu eluted. It can be said that the higher the measured amount of Cu eluted after immersion in water, the more antibacterial components and antiviral components that can be eluted remain even after long-term exposure to the aqueous environment , and thus the higher the antibacterial persistence and antiviral properties. With regard to the antibacterial persistence and antiviral persistence, the amount of Cu eluted after immersion in water is preferably 100 ppm/m² or more and more preferably 1000 ppm/m² or more.

### (Average grain size)

The stainless steel materials according to the present embodiment preferably has an average grain size of 1 to 100 µm on the surface. If the average grain size is out of this range, processability or the like is restricted.

### (Color tone of surface)

The color tone of the surface preferably has a chromatic index a* in a CIE L*a*b* color space of 0 or more and 3.0 or less. The numerical value of a* in the CIE L*a*b* color space (sometimes abbreviated as "CIELab color space" in the present specification) indicates that a color is achromatic when it is zero, becomes more reddish when it is more positive, and becomes more greenish when it is more negative. The surface of stainless steel has an appearance of a silver-white stainless steel skin. As the amount of Cu contained in the surface layer increases, the color tone of the surface becomes copper-reddish. Therefore, a* is used as an index to determine the color tone of the surface. If the a* is more than 3.0, the reddish color becomes stronger, which is not preferable in terms of appearance depending on applications of the stainless steel.

### (Manufacturing method)

The stainless steel materials according to the present embodiment can be manufactured by applying Cu plating to the surface of the stainless steel materials and then heating the stainless steel materials under a non-oxidation atmosphere. Ordinary stainless steel materials can be used as the matrix. In the case of stainless steel sheets, steel sheets manufactured by known manufacturing processes of steel-making, hot rolling, and cold rolling can be used.

Cu plating is applied to the surface of the stainless steel material. The Cu plating method is not particularly limited and can be performed by known electrolytic or electroless plating. The thickness of the Cu plating may be 0.05 to 2 µm. If the Cu plating thickness is less than 0.05 µm, Cu-rich regions are not sufficiently formed on the surface layer, and thus good antibacterial properties cannot be obtained. If the Cu plating thickness is more than 2 µm, the surface after heating becomes reddish in addition to silver-white, which is not preferable as a color tone of the stainless steel surface.

After the Cu plating is applied, treatment that forms the Cu plating that has an average film thickness of 1.0 µm or less may be performed by rolling. With the steel material thicker than the final product (= shorter sheet length), Cu plating thicker than the target value makes it possible not only to reduce the variation in Cu plating thickness, but also to shorten the sheet-passing time in the case of plates and coils, thus improving productivity. In addition, the surface of the Cu plating layer is flattened by rolling, and a uniform color tone can be obtained. The Cu plating layer adheres to the surface of the stainless steel material, which contributes to the promotion of Cu diffusion in the subsequent heat treatment. Furthermore, after crystal grain refinement by recrystallization occurs during post-rolling heat treatment, Cu diffusion and penetration into grain boundaries occur without delay, facilitating the formation of a Cu-rich region along the grain boundaries.

The stainless steel material after the Cu plating is subjected to heat treatment under a non-oxidation atmosphere. This heat treatment causes the Cu atoms in the Cu plating layer to diffuse from the surface to the internal metal structure. Since Cu atoms diffuse more easily at crystal grain boundaries than in crystal grains, they tend to be unevenly distributed at and around the crystal grain boundaries. As a result, a Cu-rich region including a Cu grain boundary layer with high Cu concentration is formed on the surface layer of heat-treated stainless steel material.

During heat treatment, a non-oxidation atmosphere is used to prevent oxidation of Cu. The non-oxidation atmosphere preferably include at least one selected from the group consisting of argon gas, hydrogen gas, and nitrogen gas. Each of these gases may be used alone, or a mixed gas thereof may be used.

The heating conditions for heat treatment can be appropriately selected depending on the type and thickness of the steel material. The heating temperature is preferably in a range of 950 to 1200°C. When the heating temperature is less than 950°C, the amount of Cu diffused into the crystal grain boundaries of the stainless steel material is reduced, making it impossible to form a Cu-rich region sufficient to exhibit antibacterial properties. The higher the heating temperature, the higher the Cu diffusion rate. At temperatures near 1083°C and higher, which is the melting point of the Cu plating layer, further penetration of molten Cu into grain boundaries occurs, which facilitates the formation of a Cu-rich region along the grain boundaries. Accordingly, the heating temperature is preferably 950°C or higher, more preferably 1050°C or higher, and even more preferably 1083°C or higher.

If the heating temperature is high, the distribution proportion of crystal grain boundaries, in which Cu accumulates, reduces due to coarsening of the crystal grains, the amount of Cu melted and evaporated in the Cu-rich region increases, making it impossible to form a Cu-rich region sufficient to exhibit antibacterial properties. For this reason, the heating temperature is preferably 1200°C or lower, more preferably 1150°C or lower, and even more preferably 1100°C or lower.

The heating time can be set appropriately depending on the heating temperature. It is preferable to select a range of 1 second to 60 minutes after reaching the predetermined heating temperature. When the heating time is less than 1 second, the amount of Cu diffusion is small, and thus a sufficient Cu-rich region cannot be formed. When the heating time is more than 60 minutes, the volume diffusion of Cu progresses excessively and the proportion of Cu diffused into the crystal grains and internal structure of the surface layer increases. Therefore, the formation of the Cu-rich region in the surface layer becomes insufficient and thus is not preferable. After heating, it can be air-cooled or water-cooled by an appropriate means. The range of heating time is preferably 1 to 600 seconds and more preferably 1 to 180 seconds.

Here, if the heating rate is slow, intragranular diffusion occurs during the temperature rise, and the formation depth of the Cu intragranular diffusion layer increases. Therefore, the heating rate is preferably 5°C/s or higher and more preferably 10°C/s or higher. Furthermore, if the cooling rate is slow, not only does the intragranular diffusion during cooling occur, but also the amount of the Cu-dominated second phase precipitated in the grains increases, which may excessively harden the surface and deteriorate the processability. Therefore, the cooling rate is preferably 1°C/s or higher and more preferably 5°C/s or higher.

The steel grade of the stainless steel materials according to the present embodiment is not particularly limited. For example, austenite-based stainless steel such as SUS304 and SUS316, ferrite-based stainless steel such as SUS430, martensite-based stainless steel such as SUS410, and duplex stainless steel such as SUS329J1 can be applied to those equivalent steel grades.

The stainless steel materials can be in the shape of plates, bars, tubes, etc. The stainless steel materials obtained by known manufacturing processes such as steel-making, hot rolling, and cold rolling can be used.

The stainless steel materials according the present embodiment is suitable for applications that require antibacterial properties and corrosion resistance. They can be applied to vessels, fixtures, building materials, devices, members, tableware, medical equipment, etc.

### EXAMPLES

Hereinafter, Examples of the present invention will be explained. The present invention is not limited to the following Examples.

Each stainless steel with chemical components shown in Table 1 was melted, each billet was extracted at 1230°C, and then hot rolling was performed to obtain a hot-rolled sheet having a thickness of 3 mm. Subsequently, the hot-rolled sheet was annealed at 1100°C, pickled, and cold-rolled to obtain three types of cold-rolled sheets each having a thickness of 1.0 mm, 1.5 mm, and 2.0 mm. The resulting cold-rolled sheets was subjected to annealing at 1100°C and pickling to obtain cold-rolled and annealed materials. Test materials with dimensions of 30 mm × 30 mm were cut out of the cold-rolled and annealed materials to produce test pieces.

**[Table 1]**

| (mass%) | | | | | | | | | | | |
|---|---|---|---|---|---|---|---|---|---|---|---|
| Steel material | C | Si | Mn | P | S | Ni | Cr | Mo | Cu | Nb | N |
| A | 0.05 | 0.50 | 0.80 | 0.030 | 0.005 | 8.05 | 18.20 | 0.14 | 0.20 | 0.03 | 0.03 |
| B | 0.02 | 0.70 | 1.60 | 0.030 | 0.003 | 12.05 | 17.30 | 2.05 | 0.31 | 0.02 | 0.01 |
| C | 0.04 | 0.73 | 1.65 | 0.030 | 0.002 | 12.45 | 16.30 | 0.05 | 3.28 | 0.02 | 0.01 |
| D | 0.05 | 0.50 | 1.51 | 0.028 | 0.002 | 19.05 | 24.58 | 0.21 | 0.01 | 0.01 | 0.03 |
| E | 0.07 | 0.40 | 0.73 | 0.031 | 0.004 | 0.11 | 16.08 | 0.04 | 0.05 | 0.01 | 0.01 |
| F | 0.02 | 0.50 | 1.21 | 0.020 | 0.001 | 6.10 | 24.25 | 3.11 | 0.21 | 0.01 | 0.11 |
| G | 0.04 | 0.60 | 1.35 | 0.030 | 0.001 | 9.29 | 18.25 | 0.04 | 3.80 | 0.01 | 0.03 |

The types of stainless steels used are indicated by steel materials A to G in Table 1. The steel materials A to D and G are of austenite-based stainless steel, the steel material E is of ferrite-based stainless steel, and the steel material F is of duplex stainless steel.

As shown in Table 2, test materials No. 1 to No. 19 were prepared using the steel materials A to G.

**[Table 2]**

| No. | Steel grade | Sheet thickness (mm) | Cu plating thickness (µm) | Heat treatment | | | | | Note |
|---|---|---|---|---|---|---|---|---|---|
| | | | | Atmosphere | Temperature (°C) | Soaking time (s) | Heating rate (°C/s) | Cooling rate (°C/s) | |
| 1 | A | 1.0 | 0.1 | Ar | 1050 | 30 | 10 | 3 | Present inventive example |
| 2 | A | 1.0 | 0.1 | H₂ + N₂ | 1050 | 30 | 10 | 3 | Present inventive example |
| 3 | A | 1.0 | 0.2 | H₂ + N₂ | 1100 | 120 | 10 | 3 | Present inventive example |
| 4 | A | 2.0 | 0.5 | H₂ + N₂ | 1150 | 600 | 10 | 3 | Present inventive example |
| 5 | A | 1.0 | 0.05 | H₂ + N₂ | 1000 | 3600 | 10 | 3 | Present inventive example |
| 6 | B | 1.5 | 0.2 | H₂ + N₂ | 1100 | 120 | 10 | 3 | Present inventive example |
| 7 | c | 1.0 | 0.2 | H₂ + N₂ | 1100 | 120 | 10 | 3 | Present inventive example |
| 8 | D | 1.0 | 0.2 | H₂ + N₂ | 1100 | 120 | 10 | 3 | Present inventive example |
| 9 | E | 1.0 | 0.2 | H₂ + N₂ | 1100 | 120 | 10 | 3 | Present inventive example |
| 10 | F | 1.0 | 0.2 | H₂ + N₂ | 1100 | 120 | 10 | 3 | Present inventive example |
| 11 | G | 1.5 | - | - | - | - | - | - | Comparative Example |
| 12 | A | 1.0 | - | - | - | - | - | - | Comparative Example |
| 13 | A | 1.0 | 2.0 | - | - | - | - | - | Comparative Example |
| 14 | A | 1.0 | 2.0 | Ar | 1050 | 10 | 10 | 3 | Comparative Example |
| 15 | A | 1.0 | 0.1 | Ar | 1150 | 600 | 10 | 3 | Comparative Example |
| 16 | A | 1.0 | 0.02 | Ar | 1050 | 60 | 10 | 3 | Comparative Example |
| 17 | A | 1.0 | 5.0 | Ar | 1200 | 600 | 10 | 3 | Comparative Example |
| 18 | A | 1.0 | 5.0 | Ar | 1200 | 600 | 0.2 | 3 | Comparative Example |
| 19 | A | 1.0 | 5.0 | Ar | 1200 | 600 | 10 | 0.1 | Comparative Example |

For the test materials No. 1 to No. 10 and No. 13 to No. 19, Cu plating was applied by electrolytic plating. Plating conditions were set as follows: the anode was a Pt plate; the composition and concentration of the electrolyte was 200 g/L of copper sulfate, 50 g/L of sulfuric acid; the temperature was 40°C, the current was 5 A/dm²; and the time was 60 seconds at maximum. As shown in Table 2 for the Cu plating thickness, the Cu plating thickness of the test materials was in a range of 0.02 to 5.0 µm. The thickness of the metal plating was measured by means of cross-sectional observation. The test materials No. 11 and No. 12 were not plated with Cu as Comparative Examples.

The test materials No. 1 to No. 10 and No. 14 to No. 19 with Cu plating applied were then subjected to heat treatment. The test material No. 13 was not subjected to heat treatment as a Comparative Example. Heat treatment conditions are shown in Table 2. As shown in Table 2, two types of non-oxidation atmosphere were used: a single gas of 100% argon gas, and a mixed gas of 75 vol% of hydrogen gas and 25 vol% of nitrogen gas. "Ar" in the atmosphere column of Table 2 indicates 100% of Ar, and "H₂ + N₂" indicates 75 vol% of H₂ + 25 vol% of N₂. The heating temperature was set to 1000°C, 1050°C, 1100°C, 1150°C, or 1200°C. The test materials were placed in a heating furnace in which a predetermined non-oxidation atmosphere was maintained, and the temperature was raised at a heating rate (°C/s) shown in Table 2 to reach a predetermined heating temperature. Then, they were maintained at a soaking time (second) shown in Table 2. Then, the materials were cooled to 25°C at an average cooling rate (°C/s) shown in Table 2 using gas flow cooling in the heating furnace. The resulting test materials were used to conduct EPMA analysis and antibacterial tests.

### (Measurement relating to Cu-rich region)

At a surface of a test material, a region with an area of 10000 µm² was mapped and analyzed by EPMA to identify a Cu-rich region in which the Cu concentration was in a range higher by 5% by mass or more relative to the average concentration in a matrix. Subsequently, the area of the Cu-rich region was measured on an image. The measured value was divided by the area of the measured surface to calculate an area ratio (%) of the Cu-rich region.

An EPMA apparatus used was the JXA-8530F, manufactured by JEOL Ltd. Analysis conditions of EPMA were set as follows: an acceleration voltage of 15 kV, an irradiation current of 0.1 µA, a beam diameter of 3 nm, an analysis time of 30 ms, and a measurement interval of 0.2 µm. For Cu concentration analysis, the ZAF correction method was applied.

### (Average number of Cu-rich region)

Next, the test materials were cut in a direction orthogonal to the surface of the test materials to obtain a cross section. In a similar way with the Cu concentration analysis by EPMA as described above, a Cu-rich region in which the Cu concentration in the cross section was in a range higher by 5% by mass or more relative to the average concentration in a matrix was identified. Subsequently, Cu-rich regions that extended continuously from the surface of the test materials were identified. Among them, the average number of Cu-rich regions that extended from the surface to a depth of 10 µm or more was examined. An imaginary line parallel to the surface of the test materials was set at a distance of 300 µm in a position of 10 µm depth from the surface of the test materials. Among Cu-rich regions that extended continuously from the surface, the number of the Cu-rich regions intersected with the imaginary line was counted. The average value of the number of intersections with the imaginary line per 100 µm was calculated and set as the average number of the Cu-rich regions.

### (Measurement of average grain size)

For the test materials, an average grain size (µm) at the surface of the test materials was measured in accordance with a cutting method specified in JIS G0551.

### (Measurement of surface color tone)

The color tone at the surface of the test materials was measured in accordance with JIS Z8722, to determine a chromatic index a* in a CIELab color space. As a spectral colorimeter, CM-700d (manufactured by KONICA MINOLTA, INC.) was used.

### (Measurement of amount of Cu eluted)

The amount of Cu eluted from the surface of the test materials was measured. The test pieces used were cut out of sample materials to dimensions of 30 mm × 30 mm. They were immersed in 25 mL of a 5% HNO₃ aqueous solution so that all surfaces of the test pieces were in contact with it. After the immersion state was maintained at room temperature for 2 hours, the test pieces were removed from the aqueous solution. Subsequently, the Cu concentration in the aqueous solution was analyzed by the ICP method. The larger the amount of Cu eluted, the higher the antibacterial properties and antiviral properties of the test materials can be determined.

### (Measurement of antibacterial activity value)

Antibacterial tests using Staphylococcus aureus were performed in accordance with JIS Z2801 (2012) to measure antibacterial activity values of the test materials. The higher the resulting antibacterial activity values, the higher the antibacterial properties of the test materials can be determined. Note that the antibacterial activity value was expressed as "> 2.7" when a viable cell count (CFU·cm⁻²) after tests was below the lower limit of the measurement.

### (Measurement of antiviral activity value)

Antiviral tests using influenza A virus were performed in accordance with ISO21702:2019 to measure antiviral activity values of the test materials. The higher the resulting antiviral activity values, the higher the antiviral properties of the test materials can be determined. Note that the antiviral activity value was expressed as "> 2.9" when a virus infectivity titer (PFU·cm⁻²) after tests was below the lower limit of the measurement.

### (Evaluation of antibacterial persistence and antiviral persistence)

The antibacterial persistence and antiviral properties of the test materials were evaluated. The 30 mm × 30 mm test pieces were used and immersed in 500 ml of pure water so that all surfaces of the test pieces were in contact with it. After the immersion state was maintained at 25°C for one month, the test pieces were removed from the water. Subsequently, the amount of Cu eluted was measured in a similar way with the method for measuring the amount of Cu eluted as described above. The amount of Cu eluted after being immersed in water for a long period of time (hereinafter, sometimes described as "amount of Cu eluted after water immersion") is a value indicating the amount of Cu that can be eluted and remains on the surface after Cu, which is an antibacterial component and an antiviral component, is eluted by long-term exposure to the aqueous environment. It can be said that the higher the value, the higher the antibacterial persistence. With regard to the antibacterial persistence, the amount of Cu eluted after water immersion is preferably 100 ppm/m² or more and more preferably 1000 ppm/m² or more.

### (Evaluation of bending workability)

The bending workability of the test materials were evaluated. The test pieces cut out of the sample materials to dimensions of 20 mm × 50 mm were used to carry out 180° bending by a pressing bend method in accordance with JIS Z2248 (2006). The surface after the bending process was observed with a loupe to confirm whether there were any surface cracks. The case where no surface cracks were recognized was regarded as "none" and judged as a pass. The case where a surface crack was recognized was regarded as "present" and judged as unsuitable.

The test results are shown in Table 3. In the treatment column of Table 3, "Yes (indicated by circle symbol (o))"indicates that the treatment was performed, and "-" indicates that the treatment was not performed. In the bending-workability column of Table 3, "-" indicates that no surface cracks were observed.

**[Table 3]**

| No. | Steel grade | Treatment | | Matrix | | Cu-rich region | | | Surface | Antibacterial property and antiviral property | | | Antibacterial persistence and antiviral persistence | Bending workability | Note |
|---|---|---|---|---|---|---|---|---|---|---|---|---|---|---|---|
| | | Metal plating | Annealing | Sheet thickness (mm) | Average crystal grain size (µm) | Area ratio (%) | Average number (pieces /100µm) | Formation depth of intergranular diffusion layer (µm) | Color tone (a^{∗}) | Amount of Cu eluted (ppm/m²) | Antibacterial activity value | Antiviral activity value | Amount of Cu eluted after water immersion (ppm/m²) | Surface crack | |
| 1 | A | ○ | ○ | 1.0 | 25 | 12 | 3.8 | 0.1 | 1.1 | 11000 | >2.7 | >2.9 | 5500 | - | Present inventive example |
| 2 | A | ○ | ○ | 1.0 | 25 | 11 | 3.7 | 0.1 | 0.9 | 10800 | >2.7 | >2.9 | 5000 | - | Present inventive example |
| 3 | A | ○ | ○ | 1.0 | 40 | 26 | 5.3 | 2.0 | 2.2 | 19500 | >2.7 | >2.9 | 10200 | - | Present inventive example |
| 4 | A | ○ | ○ | 2.0 | 88 | 23 | 3.1 | 5.0 | 2.7 | 15300 | >2.7 | >2.9 | 7800 | - | Present inventive example |
| 5 | A | ○ | ○ | 1.0 | 28 | 8 | 4.3 | 1.0 | 0.5 | 4300 | >2.7 | >2.9 | 1900 | - | Present inventive example |
| 6 | B | ○ | ○ | 1.5 | 34 | 10 | 3.3 | 0.5 | 1.3 | 5200 | >2.7 | >2.9 | 3500 | - | Present inventive example |
| 7 | C | ○ | ○ | 1.0 | 15 | 6 | 5.5 | 0.5 | 0.5 | 21000 | >2.7 | >2.9 | 13500 | - | Present inventive example |
| 8 | D | ○ | ○ | 1.0 | 27 | 9 | 4.6 | 0.5 | 0.8 | 13300 | >2.7 | >2.9 | 6600 | - | Present inventive example |
| 9 | E | ○ | ○ | 1.0 | 32 | 28 | 2.3 | 3.0 | 2.9 | 3100 | >2.7 | >2.9 | 1100 | - | Present inventive example |
| 10 | F | ○ | ○ | 1.0 | 14 | 21 | 3.0 | 1.0 | 2.8 | 4100 | >2.7 | >2.9 | 1500 | - | Present inventive example |
| 11 | G | - | - | 1.5 | 30 | 0 | 0.0 | - | 1.3 | 300 | 2.4 | 2.8 | 0 | - | Comparative Example |
| 12 | A | - | - | 1.0 | 24 | 0 | 0.0 | - | 0.8 | 0 | 1.2 | 1.1 | 0 | - | Comparative Example |
| 13 | A | ○ | - | 1.0 | 24 | 100 | 0.0 | - | 25.4 | 84500 | >2.7 | >2.9 | 53900 | - | Comparative Example |
| 14 | A | ○ | ○ | 1.0 | 26 | 60 | 6.5 | 0.5 | 7.8 | 51300 | >2.7 | >2.9 | 34100 | - | Comparative Example |
| 15 | A | ○ | ○ | 1.0 | 102 | 3 | 3.9 | 20.7 | 2.2 | 500 | 1.5 | 1.7 | 0 | Present | Comparative Example |
| 16 | A | ○ | ○ | 1.0 | 23 | 11 | 1.0 | 0.1 | 1.2 | 600 | 2.4 | 2.5 | 0 | - | Comparative Example |
| 17 | A | ○ | ○ | 1.0 | 85 | 100 | 4.5 | 10.0 | 6.2 | 77000 | >2.7 | >2.9 | 12100 | - | Comparative Example |
| 18 | A | ○ | ○ | 1.0 | 90 | 100 | 3.5 | 35.0 | 1.8 | 11220 | >2.7 | >2.9 | 3300 | Present | Comparative Example |
| 19 | A | ○ | ○ | 1.0 | 91 | 100 | 3.7 | 40.0 | 1.5 | 13090 | >2.7 | >2.9 | 3500 | Present | Comparative Example |

As shown in Table 3, in the present inventive examples of the test materials No. 1 to No. 10, the Cu-rich regions with a Cu concentration higher by 5% by mass or more relative to the average Cu concentration in the matrix were formed along crystal grain boundaries, and the average number of the Cu-rich regions that extended continuously at a depth of 10 µm to 200 µm from the surface was 2.0 or more per 100 µm of a distance parallel to the surface in the cross section. Therefore, the amounts of Cu eluted were 1000 ppm/m² or more; the antibacterial activity values were in the range of more than 2.7; and the antiviral activity values were in the range of more than 2.9, thus indicating high antibacterial properties and antiviral properties. Furthermore, the amounts of Cu eluted after water immersion also indicated high antibacterial persistence and antiviral persistence. In the present inventive examples, Cu penetrated from the surface to the deep position, and therefore they had excellent antibacterial persistence and antiviral persistence even when being immersed in water for a long time since Cu to be eluted was supplied from the internal structure.

In addition, the present inventive examples had a chromatic index a* in the CIELab color space of 0 or more and 3.0 or less, and thus, has a silver-white appearance of stainless steel without a strong reddish tint. This is considered to be due to the fact that the area ratio of the Cu-rich regions in the present inventive examples was in the range of 5 to 30%. In addition, with regard to the bending workability, no surface cracks were observed in the present inventive examples even 180° bending was performed. This is considered to be due to the fact that the formation depth of Cu intragranular diffusion layers in the present inventive examples was in the range of 20 µm or less.

On the other hand, the test material No. 11 is a Cu-containing antibacterial stainless steel of a conventional material. With regard to the Cu-rich region, the average number per 100 µm was less than 2.0, and therefore the test material was inferior in all antibacterial properties, antiviral properties, antibacterial persistence, and antiviral persistence to the present inventive examples. Since Cu is dispersed throughout the steel material, the amount of Cu in the surface layer is small, and the Cu-rich region is short in the sheet thickness direction, it is assumed that the amount of Cu in the surface layer is depleted with prolonged water immersion.

The test material No. 12 is a Comparative Example in which Cu plating was not applied. With regard to the Cu-rich region, the average number per 100 µm was less than 2.0, and therefore the test material was inferior in all antibacterial properties, antibacterial persistence, antiviral properties, and antiviral persistence to the present inventive examples. This is considered to be due to the small amount of Cu in the surface layer.

The test material No. 13 is a Comparative Example in which no heat treatment was applied after the Cu plating. The test material No. 14 is a Comparative Example in which the Cu plating thickness was increased and heat treatment was applied. In both cases, the color tone a* was more than 3, and therefore the color tone of the surface was strongly reddish, impairing the appearance of the silver-white stainless steel skin. These are considered to be due to the excessive amount of Cu on the surface, such that the each area ratio of the Cu-rich region was more than 30%.

The test material No. 15 was subjected to heat treatment at a relatively high temperature for a long time, which coarsened the crystal grains and reduced the number of grain boundaries, thus promoting the volume diffusion of Cu in the matrix. Therefore, the intragranular diffusion layer was thickened, impairing the bending workability. The test material No. 16 had a very thin Cu plating thickness and was further subjected to heat treatment at a relatively low temperature for a short time. As a result, the range of Cu diffusion along the grain boundaries became shallow, and the average number of Cu-rich region was less than 2.0. Therefore, the test material was inferior in all antibacterial properties, antibacterial persistence, antiviral properties, and antiviral persistence to the present inventive examples.

The test materials No. 17 to 19 are Comparative Examples when the Cu plating thickness was more than 2.0 µm. In No. 17, the chromatic index a* was more than 3, and therefore the color tone of the surface was strongly reddish, impairing the appearance of the silver-white stainless steel skin. In No. 18 and No. 19, the heating or cooling time was slowed down to allow thick Cu plating to sufficiently penetrate into the matrix. As a result, the intragranular diffusion layers became thick, thus impairing the bending workability.

### EXPLANATION OF REFERENCE NUMERALS

- 1: Surface
- 2: Surface layer
- 3: Cu-rich region
- 4: Cross section
- 5: Imaginary line
- 6: Cu grain boundary layer
- 7: Cu intragranular diffusion layer

## Claims

1. A stainless steel material having antibacterial properties and antiviral properties, comprising a Cu-rich region extending along a crystal grain boundary on a surface of the stainless steel material and in a surface layer located immediately below the surface and having a concentration of Cu (copper) higher than an average Cu concentration ,
wherein the Cu-rich region is a region in which a Cu concentration is higher by 5% by mass or more relative to the average Cu concentration and has a Cu grain boundary layer that extends continuously at a depth of 10 µm to 200 µm from the surface of the stainless steel material,
an average number of Cu grain boundary layers is 2.0 or more per 100 µm of a distance parallel to the surface of the stainless steel material in a cross section orthogonal to the surface of the stainless steel material,
and a chromatic index a* in a CIE Lab color space on the surface is 0 or more and 3.0 or less.

2. The stainless steel material having antibacterial properties and antiviral properties according to claim 1, having an average crystal grain size of 1 to 100 µm on the surface.

3. The stainless steel material having antibacterial properties and antiviral properties according to claim 1 or 2, wherein the Cu-rich region comprises a Cu grain boundary layer that extends along the crystal grain boundary and a Cu intragranular diffusion layer formed within the crystal grain.

4. A method for manufacturing the stainless steel material having antibacterial properties and antiviral properties according to any one of claims 1 to 3, comprising: applying Cu plating that has a thickness of 0.05 to 2.0 µm to a stainless steel material; and heating the stainless steel material that has the Cu plating under a non-oxidation atmosphere at a heating rate of 5°C/s or higher on average, followed by cooling at an average cooling rate of 1°C/s or higher.

5. The method for manufacturing the stainless steel material having antibacterial properties and antiviral properties, according to claim 4, comprising making an average film thickness of the Cu plating to 1.0 µm or less by rolling after the Cu plating is applied.

6. The method for manufacturing the stainless steel material having antibacterial properties and antiviral properties, according to claim 4 or 5, wherein the non-oxidation atmosphere includes at least one selected from the group consisting of argon gas, hydrogen gas, and nitrogen gas.
